# EUROPEAN PATENT SPECIFICATION

(11) **EP 3 334 053 B1**
(45) Date of publication and mention of the grant of the patent: **30.12.2020**
(21) Application number: 16781039.9
(22) Date of filing: 12.04.2016
(51) Int. Cl.: H04B 1/00, H04B 1/50, H04L 5/14

(54) **BAND28 FREQUENCY BAND BASED RADIO FREQUENCY APPARATUS AND COMMUNICATION METHOD THEREFOR**
AUF BAND28-FREQUENZBAND BASIERENDE FUNKFREQUENZVORRICHTUNG UND KOMMUNIKATIONSVERFAHREN DAFÜR
APPAREIL RADIOFRÉQUENCE À BANDE 28 DE FRÉQUENCES ET PROCÉDÉ DE COMMUNICATION ASSOCIÉ

(30) Priority: 07.08.2015 CN 201510480937
(43) Date of publication of application: 13.06.2018
(73) Proprietor: Huizhou TCL Mobile Communication Co., Ltd., Huizhou, Guangdong 516006 (CN)
(72) Inventor: ZHANG, Hua, HuiZhou Guangdong 516006 (CN)
(74) Representative: Isarpatent
(86) International application number: PCT/CN2016/079020
(87) International publication number: WO 2017/024806

(56) References cited:
- WO-A1-2012/109262
- CN-A- 101 309 087
- CN-A- 105 049 078
- US-A1- 2013 121 217
- US-A1- 2014 119 244
- NTT DOCOMO, INC.;: 'Proposal for Band 28 test frequency ana assignment in overlapped frequency' 3GPP TSG RAN WG5 MEETING #57 R5-125306 09 November 2012, XP050677769
- KINCL, Z. ET AL.: 'Test Frequency Selection for Band-Pass Filters' RADIOELEKTRONIKA (RADIOELEKTRONIKA), 2010 20TH INTERNATIONAL CONFERENCE 19 April 2010, pages 1 - 4, XP031685275

## Description

### BACKGROUND

### 1. Field of the disclosure

The present disclosure relates to radio frequency (RF) communication technology, and more specifically to an RF device based on Band 28 and a communication method thereof.

### 2. Description

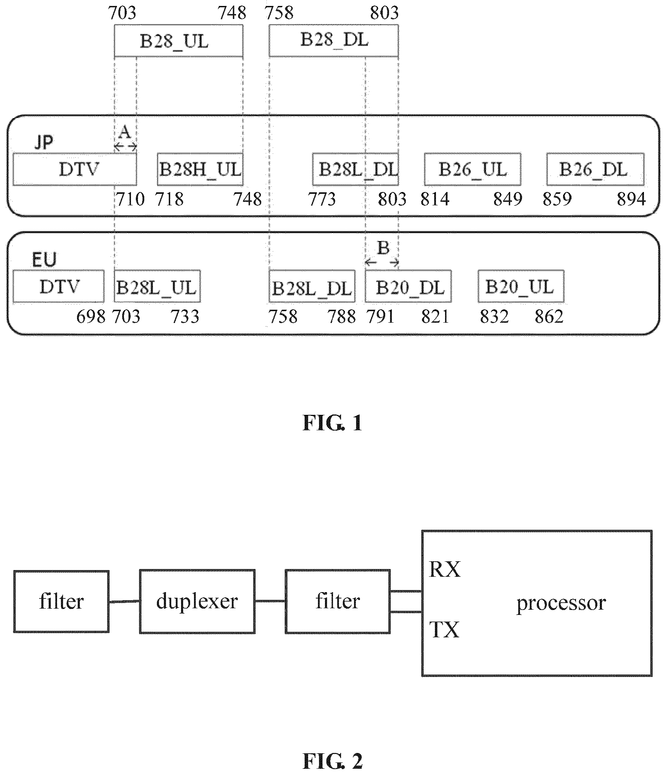

At present, the third Generation Partnership Project (3GPP) divides Band 28 (hereinafter referred as B28) into RX=758M - 803MHz and TX=703M - 748MHz. However, Band 28 and band of Digital Television (DTV) are very close, and lead an overlapping band. Shown as FIG. 1, B28_UL is for an uplink band, UL (uplink) means TX (transmit). B28_DL is for a downlink band, DL (downlink) means RX (receive). B20, B26, and B28 are different bands. In a Japanese band (JP) shown in FIG. 1, an overlap part between band of the DTV and the uplink band of B28 (B28_UL) is 703MHz - 710MHz (shown as A). In an European Union band (EU), the overlap part of the downlink band of B28 (B28_DL) and the downlink band of B20 (B28_DL) is 791MHz - 803MHz (shown as B). Due to large transmission power, noise interference that produced easily, the uplink band needs to suppress the overlap band. Meanwhile, whether the downlink band overlaps or not does not affect the transmission of the data.

Nowadays, common platforms all support full band of Band 28. Concerning operating costs, most terminal manufacturers produce mobile phones in the full band of Band 28. However, there is a very important testing item, called additional spectrum stray. In order to solve coexistence between band of DTV and B28, suppression ability of duplexes for B28 is particularly important in the range from 703MHz to 710MHz. And from March 2015, the additional spectrum stray of B28 has been listed as a default item by the certification body. Especially, upon a condition that 5M and 10M of NS-17 is bandwidth measured, the measured frequencies needs E-URA fall into the range from 718MHz to 748MHz, the test frequency points are 725.5MHz (corresponding to the 5M) and 723MHz (corresponding to the 10M).

As a radio frequency (RF) architecture shown in FIG. 2, an uplink band of the duplexer is 703MHz - 748MHz, an overlap part covered band of the DTV is 703MHz - 710MHz. upon a condition that the measure sweep band is 470MHz - 710MHz, and the 470MHz - 710MHz falls into Band 28, the duplexer cannot suppress for the range from 703MHz to 710MHz (if suppressed, the data of the frequency will be lost). Therefore, upon a condition that using the traditional RF test solution, the additional spectrum stray is very hard to implement because the overlap part cannot be suppressed.

US patent publication No. S20130121217A1 discloses a multi-mode split band duplexer architecture, and PCT application PCT/US2012/024168 with publication No. WO2012109262A1 discloses insertion loss improvement in a multi-band device. These publications are related arts. Therefore, the prior art has to be improved and developed.

### SUMMARY OF THE DISCLOSURE

To overcome the above-mentioned disadvantages, an object of the present disclosure is to provide a radio frequency (RF) device based on Band 28 and a communication method thereof. The main technological problem to be solved is how to suppress overlapping bands in the existing RF solutions, to avoid the difficulties of the additional spurious spectral.

To overcome the above-mentioned disadvantages, the technical schemes of the present disclosure are illustrated hereunder.

The RF device, comprises a first duplexer, a second duplexer, and a processor, the processor is configured to include a channel switch;
the first duplexer being configured for transceiving a first band signal in a first band and being connected to a first transmit port and a first receive port of the processor, the second duplexer being configured for transceiving a second band signal in a second band and being connected to a second transmit port and a second receive port of the processor, the processor being configured to select a corresponding one of the duplexers to transceive a signal by the channel switch according to a frequency band of the signal;
characterised in that the first band and the second band are configured such that:
the first band and the second band belong to a Band 28, the Band 28 comprising an uplink band having a starting frequency point of 703MHz and an ending frequency point of 748MHz and a downlink band having a starting frequency point of 758MHz and an ending frequency point of 803MHz;
an overlapping band, consisting of an overlap between Band 28 and a DVT band, belongs to the first band, the overlapping band spanning from 703MHz to 710MHz;
the frequency test points having the values of 725.5MHz and 723MHz belong to the second band;
the first band comprises a first uplink band and a first downlink band, wherein a starting frequency point of the first uplink band is equal to the starting frequency point of the uplink band of the Band 28, and an end frequency point of the first uplink band is less than the frequency test points; and
the second band comprises a second uplink band and a second downlink band, wherein a starting frequency point of the second uplink band is greater than the end frequency point of the first uplink band a frequency point unit of 0.1 MHz, and an end frequency point of the second uplink band is equal to the end frequency point of the uplink band of the Band 28.

In the RF device, a starting frequency point of the first downlink band differs by a default value from the starting frequency point of the first uplink band; and
a starting frequency point of a second downlink band differs by the default value from the starting frequency point of the second uplink band.

In the RF device, a difference value between the end frequency point of the first uplink band and the starting frequency point of the first uplink band is equal to a difference value between an end frequency point of the first downlink band and the starting frequency point of the first downlink band; and
a difference value between the end frequency point of the second uplink band and the starting frequency point of the second uplink band is equal to a difference value between an end frequency point of the second downlink band and the starting frequency point of the second downlink band.

In the RF device,
the first uplink band is 703MHz - 722.5MHz, the first downlink band is 758MHz - 777.5MHz;
the second uplink band is 722.6MHz - 748MHz, and the second downlink is 777.6MHz - 803MHz.

The communication method, is applied in an RF device, the RF device comprises a first duplexer, a second duplexer, and a processor, the first duplexer being configured for transceiving a first band signal in a first band and being connected to a first transmit port and a first receive port of the processor, the second duplexer being configured for transceiving a second band signal in a second band and being connected to a second transmit port and a second receive port of the processor, the communication method comprising the steps of:
the processor determining a frequency of a signal, to be transceived, belongs to the first band or the second band;
if belonged to the first band, the processor switching to the first duplexer to transceive the signal; and
if belonged to the second band, the processor switching to the second duplexer to transceive the signal;
characterised in that the first band and the second band are configured such that:
the first band and the second band belong to a Band 28, the Band 28 comprising an uplink band having a starting frequency point of 703MHz and an ending frequency point of 748MHz and a downlink band having a starting frequency point of 758MHz and an ending frequency point of 803MHz;
an overlapping band, consisting of an overlap between Band 28 and a DVT band, belongs to the first band, the overlapping band spanning from 703MHz to 710MHz;
frequency test points having the values of 725.5MHz and 723MHz belong to the second band;
the first band comprises a first uplink band and a first downlink band, wherein a starting frequency point of the first uplink band is equal to the starting frequency point of the uplink band of the Band 28, and an end frequency point of the first uplink band is less than the frequency test points; and
   the second band comprises a second uplink band and a second downlink band, wherein a starting frequency point of the second uplink band is greater than the end frequency point of the first uplink band a frequency point unit of 0.1 MHz, and an end frequency point of the second uplink band is equal to the end frequency point of the uplink band of the Band 28.

In the communication method, a starting frequency point of the first downlink band differs by a default value from the starting frequency point of the first uplink band; and
a starting frequency point of a second downlink band differs by the default value from the starting frequency point of the second uplink band.

In the communication method, a difference value between the end frequency point of the first uplink band and the starting frequency point of the first uplink band is equal to a difference value between an end frequency point of the first downlink band and the starting frequency point of the first downlink band; and
a difference value between the end frequency point of the second uplink band and the starting frequency point of the second uplink band is equal to a difference value between an end frequency point of the second downlink band and the starting frequency point of the second downlink band.

In the communication method, the first uplink band is 703MHz - 722.5MHz; the first downlink band is 758MHz - 777.5MHz;
the second uplink band is 722.6MHz - 748MHz; and the second downlink is 777.6MHz - 803MHz.

Compared with the prior art, the RF device based on Band 28 and the communication method are provided by the present disclosure. The RF device comprises a first duplexer, a second duplexer, and a processor; the first duplexer is configured for transceiving a first band signal, the second duplexer is configured for transceiving a second band signal, the processor is configured for selecting a corresponding one of the duplexers to transceive a signal by the channel switch according to a frequency band of the signal. Wherein an overlapping band belongs to the first band, frequency test points belong to the second band, a sum of frequency of the first band and the second band fall in Band 28. The overlapping band is not belonged to bandwidth for the second duplexer, that is the second duplexer can suppress the overlapped band, thereby not only can solve the testing problem of additional spectrum stray, but also can meet the requirements of full band of Band 28.

### BRIEF DESCRIPTION OF THE DRAWINGS

FIG. 1 is a distribution diagram showing a Band 28 and a band of DTV according to the prior art.
FIG. 2 is diagram showing a radio frequency (RF) architecture according to the prior art.
FIG. 3 is a schematic structural diagram showing an RF device based on Band 28 according to the present disclosure.
FIG. 4 is a flowchart of a communication method for the RF device based on Band 28 according to the present disclosure.

### DETAILED DESCRIPTION

The present disclosure provides a radio frequency (RF) device based on Band 28 and a communication method thereof. The RF device is applied to all the terminals using Band 28, such as mobile phones, tablet computers, vehicle-mounted BLUETOOTH, etc. The principle of the present disclosure is implemented in a suitable computing environment for illustrative purposes. The following description is based on the specific illustrated embodiment of the present disclosure, which should not be construed as limiting the present disclosure, unless otherwise specified.

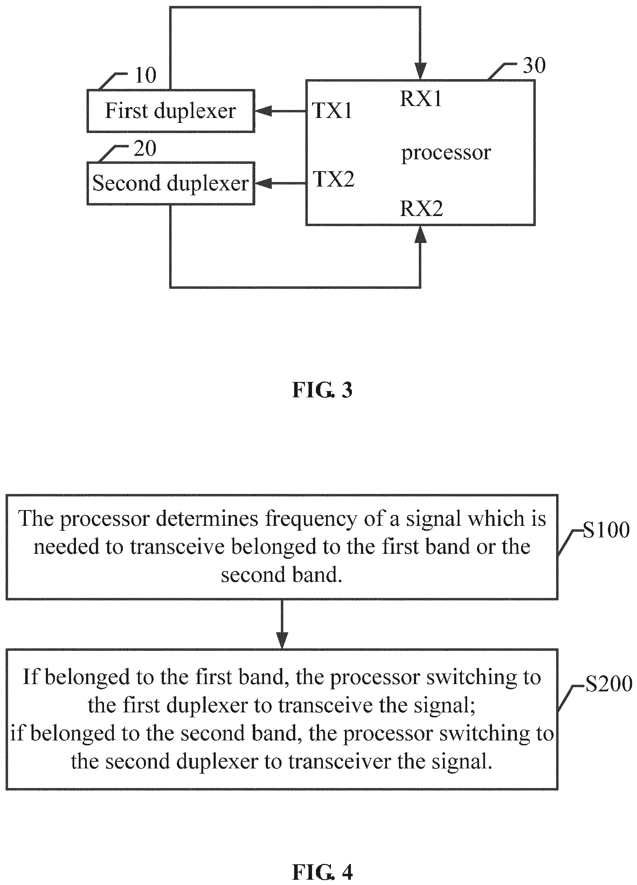

As shown in FIG. 3, the RF device provided by the present disclosure comprises a first duplexer 10, a second duplexer 20, and a processor 30. The first duplexer 10 is configured for transceiving a first band signal, and is connected to a first transmit port TX and a first receive port RX1 of the processor 30. The second duplexer 20 is configured for transceiving a second band signal, and is connected to a second transmit port TX2, and a receive port RX2 of the processor 30. The processor is configured for selecting a corresponding one of the duplexers to transceive a signal by the channel switch according to a frequency band of the signal.

The improved solution of the embodiment is an existing duplexer that is divided into two duplexers (the first duplexer 10 and the second duplexer 20), and an existing Band 28 is divided into two parts, to make the two duplexers cover the full band of Band 28. By setting range of the two duplexers, the overlapping band belongs to a first band, and frequency test points belong to a second band. That is to make the overlapping band (703MHz - 710MHz) work in one duplexer, the frequency test points work in another duplexer. The overlapping band does not belong to bandwidth of the another duplexer, so the another duplexer can suppress band 703MHz - 710MHz. Thereby, this cannot only can solve the testing problem of additional spectrum stray, but also can meet the requirements of the full band of Band 28.

In the embodiment, the first band comprises a first uplink band UL1 and a first downlink band DL1, the second band comprises a second uplink band UL2 and a second downlink band DL2. The setting requirement of band in the embodiment is a starting frequency point of the first uplink band UL1 is equal to a starting frequency point of an uplink band of Band 28, and an end frequency point of the first uplink band UL1 is less than the frequency test points. A starting frequency point of the second uplink band UL2 is greater than the end frequency point of the first uplink band UL1 a frequency point unit, an end frequency point of the second uplink band UL2 is equal to an end frequency point of the uplink band of Band 28. The two starting frequency points of the downlink band differ by a default value (usually 55MHz) from the starting frequency points of the uplink band. The greater the difference value between the end frequency point of the first uplink band and the starting frequency point of the first uplink band is closer to a difference value between an end frequency point of the first downlink band and the starting frequency point of the first downlink band. In a preferred embodiment, the two difference values are equal. In this case, the uplink band and the downlink band ranges similar or equally, thereby not only easy to set band, but also avoid one of them to be too narrow to transmit.

In the existing Band 28, the uplink band UL0 of Band 28 is 703MHz - 748MHz, a downlink band DL0 is 758MHz - 803MHz, the overlapping band is 703MHz - 710MHz, the frequency test points comprise 725.5MHz and 723MHz. In the specific embodiment, the configuration may be:

The first duplexer 10: the first uplink band UL1 is 703MHz - 722.5MHz, the first downlink band DL 758MHz - 777.5MHz.

The second duplexer 20: the second uplink band UL2 is 722.6MHz - 748MHz, the second downlink DL is 777.6MHz - 803MHz.

UL1+UL2=UL0, DL1+DL2=DLO. The uplink band differs by 55MHz from the downlink band, such as 758MHz-703MHz=55MHz. 722.5MHz differs by 722.6MHz from a frequency point unit (0.1MHz). The difference value between the end frequency point and the starting frequency point of the uplink band is equal to the difference value between an end frequency point and the starting frequency point of the downlink band. For example, the two difference values in the first duplexer 10 are both 19.5MHz, and the two difference values are 25.4.

The frequency test points 725.5MHz and 723MHz are both worked in the second duplexer 20. For the second duplexer 20, the overlapping band 703MHz - 710MHz does not belong to its bandwidth. Therefore, the second duplexer 20 can suppress band 703MHz - 710MHz. Upon a condition that the additional spectrum stray of the NS-17 is tested, it not only can solve the testing problem of additional spectrum stray, but also can meet the requirements of full band of Band 28.

It should be understood, if the exiting Band 28, the overlapping band, or the frequency test points are changed, the first duplexer and the second duplexer in the embodiment will be changed according to the above requirements.

The processor 30 is configured to include a channel switch, for selecting a corresponding one of the duplexers to transceive the signal.

Upon a condition that the signal needs to be transmitted, the processor determines which duplexer the signal frequency belongs to, and controls the channel switch to switch a corresponding transmit port (connected to the first transmit port TX1 or the second transmit port TX2), and thereby selecting a corresponding duplexer to transceive.

Upon a condition that the signal needs to be received, a station will communicate with the processor, to inform the processor about the signal frequency. Therefore, the processor can select a corresponding one of the duplexers to transceive a signal by the channel switch according to a frequency band of the signal.

Upon a condition that the RF device is not working, the channel switch will be suspended, and the two duplexer will be disconnected from the processor.

Based on the RF device based on Band 28, the present disclosure also provides a communication method, applied in an RF device based on Band 28. As shown in FIG. 4, the communication method comprises:

In step S100, the processor determines a frequency of a signal, to be transceived, belongs to the first band or the second band.

In step S200, if the frequency of the signal belongs to the first band, the processor switches to the first duplexer to transceive the signal. If the frequency of the signal belongs to the second band, the processor switches to the second duplexer to transceive the signal.

In conclusion, the improvement of the present disclosure divides an existing duplexer into two duplexers, and divides an existing Band 28 into two parts which are set on the two duplexers separately. That is to make the overlapping band work in one duplexer, the frequency test points work in another duplexer. In this situation, the overlapping band does not belong to bandwidth of the another duplexer, so the another duplexer can suppress band 703MHz - 710MHz. Thereby, this not only can solve the testing problem of additional spectrum stray, but also can meet the requirements of the full band of Band 28.

It should be understood that the present disclosure has been described with reference to certain preferred and alternative embodiment which are intended to be exemplary only and do not limit the full scope of the present disclosure as set forth in the appended claims.

## Claims

1. A radio frequency, RF, device comprising a first duplexer (10), a second duplexer (20), and a processor (30), the processor (30) being configured to include a channel switch, the first duplexer (10) being configured for transceiving a first band signal in a first band and being connected to a first transmit port (TX1) and a first receive port (RX1) of the processor, the second duplexer (20) being configured for transceiving a second band signal in a second band and being connected to a second transmit port (TX2) and a second receive port (RX2) of the processor (30), the processor (30) being configured to select a corresponding one of the duplexers (10, 20) to transceive a signal by the channel switch according to a frequency band of the signal;
**characterised in that** the first band and the second band are configured such that:
the first band and the second band belong to a Band 28, the Band 28 comprising an uplink band having a starting frequency point of 703MHz and an ending frequency point of 748MHz and a downlink band having a starting frequency point of 758MHz and an ending frequency point of 803MHz;
an overlapping band, consisting of an overlap between Band 28 and a DVT band, belongs to the first band, the overlapping band spanning from 703MHz to 710MHz;
frequency test points having the values of 725.5MHz and 723MHz belong to the second band;
the first band comprises a first uplink band and a first downlink band, wherein a starting frequency point of the first uplink band is equal to the starting frequency point of the uplink band of the Band 28 and an end frequency point of the first uplink band is less than the frequency test points; and
the second band comprises a second uplink band and a second downlink band, wherein a starting frequency point of the second uplink band is greater than the end frequency point of the first uplink band a frequency point unit of 0.1 MHz, and an end frequency point of the second uplink band is equal to the end frequency point of the uplink band of the Band 28.

2. The RF device as claimed in claim 1, wherein
a starting frequency point of the first downlink band differs by a default value from the starting frequency point of the first uplink band; and
a starting frequency point of a second downlink band differs by the default value from the starting frequency point of the second uplink band.

3. The RF device as claimed in claim 1, wherein
a difference value between the end frequency point of the first uplink band and the starting frequency point of the first uplink band is equal to a difference value between an end frequency point of the first downlink band and the starting frequency point of the first downlink band; and
a difference value between the end frequency point of the second uplink band and the starting frequency point of the second uplink band is equal to a difference value between an end frequency point of the second downlink band and the starting frequency point of the second downlink band.

4. The RF device as claimed in claim 3, wherein
the first uplink band is 703MHz - 722.5MHz, the first downlink band is 758MHz - 777.5MHz;
the second uplink band is 722.6MHz - 748MHz, and the second downlink is 777.6MHz - 803MHz.

5. A communication method, applied in an radio frequency, RF, device comprising a first duplexer (10), a second duplexer (20), and a processor (30), the first duplexer (10) being configured for transceiving a first band signal in a first band and being connected to a first transmit port and a first receive port of the processor (30), the second duplexer (20) being configured for transceiving a second band signal in a second band and being connected to a second transmit port and a second receive port of the processor (30), the communication method comprising the steps of:
the processor (30) determining a frequency of a signal, to be transceived, belongs to the first band or the second band;
if belonged to the first band, the processor (30) switching to the first duplexer (10) to transceive the signal; and
if belonged to the second band, the processor (30) switching to the second duplexer (20) to transceive the signal;
**characterised in that** the first band and the second band are configured such that:
the first band and the second band belong to a Band 28, the Band 28 comprising an uplink band having a starting frequency point of 703MHz and an ending frequency point of 748MHz and a downlink band having a starting frequency point of 758MHz and an ending frequency point of 803MHz;
an overlapping band, consisting of an overlap between Band 28 and a DVT band, belongs to the first band, the overlapping band spanning from 703MHz to 710MHz;
frequency test points having the values of 725.5MHz and 723MHz belong to the second band;
the first band comprises a first uplink band and a first downlink band, wherein a starting frequency point of the first uplink band is equal to the starting frequency point of the uplink band of the Band 28 and an end frequency point of the first uplink band is less than the frequency test points; and
the second band comprises a second uplink band and a second downlink band, wherein a starting frequency point of the second uplink band is greater than the end frequency point of the first uplink band a frequency point unit of 0.1 MHz, and an end frequency point of the second uplink band is equal to the end frequency point of the uplink band of the Band 28.

6. The communication method as claimed in claim 5, wherein
a starting frequency point of the first downlink band differs by a default value from the starting frequency point of the first uplink band; and
a starting frequency point of a second downlink band differs by the default value from the starting frequency point of the second uplink band.

7. The communication method as claimed in claim 6, wherein
a difference value between the end frequency point of the first uplink band and the starting frequency point of the first uplink band is equal to a difference value between an end frequency point of the first downlink band and the starting frequency point of the first downlink band; and
a difference value between the end frequency point of the second uplink band and the starting frequency point of the second uplink band is equal to a difference value between an end frequency point of the second downlink band and the starting frequency point of the second downlink band.

8. The communication method as claimed in claim 7, wherein
the first uplink band is 703MHz - 722.5MHz; the first downlink band is 758MHz - 777.5MHz;
the second uplink band is 722.6MHz - 748MHz; and the second downlink is 777.6MHz - 803MHz.

## Patentansprüche

1. Hochfrequenz-(HF-)Vorrichtung, umfassend einen ersten Duplexer (10), einen zweiten Duplexer (20) und einen Prozessor (30), wobei der Prozessor (30) eingerichtet ist, um einen Kanalschalter zu umfassen, wobei der erste Duplexer (10) zum Senden/Empfangen eines ersten Bandsignals in einem ersten Band eingerichtet und mit einem ersten Sendeanschluss (TX1) und einem ersten Empfangsanschluss (RX1) des Prozessors verbunden ist, wobei der zweite Duplexer (20) zum Senden/Empfangen eines zweiten Bandsignals in einem zweiten Band eingerichtet und mit einem zweiten Sendeanschluss (TX2) und einem zweiten Empfangsanschluss (RX2) des Prozessors (30) verbunden ist, wobei der Prozessor (30) eingerichtet ist, um einen entsprechenden von den Duplexern (10, 20) auszuwählen, um ein Signal durch den Kanalschalter gemäß einem Frequenzband des Signals zu senden/empfangen;
**dadurch gekennzeichnet, dass** das erste Band und das zweite Band derart eingerichtet sind, dass:
das erste Band und das zweite Band zu einem Band 28 gehören, wobei das Band 28 ein Aufwärtsstreckenband mit einem Startfrequenzpunkt von 703 MHz und einem Endfrequenzpunkt von 748 MHz und ein Abwärtsstreckenband mit einem Startfrequenzpunkt von 758 MHz und einem Endfrequenzpunkt von 803 MHz umfasst;
ein Überlappungsband, das aus einer Überlappung zwischen Band 28 und einem DVT-Band besteht, zu dem ersten Band gehört, wobei das Überlappungsband einen Bereich von 703 MHz bis 710 MHz überspannt;
Frequenzprüfpunkte, welche die Werte von 725,5 MHz und 723 MHz aufweisen, zu dem zweiten Band gehören;
das erste Band ein erstes Aufwärtsstreckenband und ein erstes Abwärtsstreckenband umfasst, wobei ein Startfrequenzpunkt des ersten Aufwärtsstreckenbandes gleich dem Startfrequenzpunkt des Aufwärtsstreckenbandes des Bandes 28 ist und ein Endfrequenzpunkt des ersten Aufwärtsstreckenbandes kleiner ist als die Frequenzprüfpunkte; und
das zweite Band ein zweites Aufwärtsstreckenband und ein zweites Abwärtsstreckenband umfasst, wobei ein Startfrequenzpunkt des zweiten Aufwärtsstreckenbandes größer ist als der Endfrequenzpunkt des ersten Aufwärtsstreckenbandes einer Frequenzpunkteinheit von 0,1 MHz und ein Endfrequenzpunkt des zweiten Aufwärtsstreckenbandes gleich dem Endfrequenzpunkt des Aufwärtsstreckenbandes des Bandes 28 ist.

2. HF-Vorrichtung nach Anspruch 1, wobei
ein Startfrequenzpunkt des ersten Abwärtsstreckenbandes um einen Standardwert von dem Startfrequenzpunkt des ersten Aufwärtsstreckenbandes abweicht; und
ein Startfrequenzpunkt eines zweiten Abwärtsstreckenbandes um den Standardwert von dem Startfrequenzpunkt des zweiten Aufwärtsstreckenbandes abweicht.

3. HF-Vorrichtung nach Anspruch 1, wobei
ein Differenzwert zwischen dem Endfrequenzpunkt des ersten Aufwärtsstreckenbandes und dem Startfrequenzpunkt des ersten Aufwärtsstreckenbandes gleich einem Differenzwert zwischen einem Endfrequenzpunkt des ersten Abwärtsstreckenbandes und dem Startfrequenzpunkt des ersten Abwärtsstreckenbandes ist; und
ein Differenzwert zwischen dem Endfrequenzpunkt des zweiten Aufwärtsstreckenbandes und dem Startfrequenzpunkt des zweiten Aufwärtsstreckenbandes gleich einem Differenzwert zwischen einem Endfrequenzpunkt des zweiten Abwärtsstreckenbandes und dem Startfrequenzpunkt des zweiten Abwärtsstreckenbandes ist.

4. HF-Vorrichtung nach Anspruch 3, wobei
das erste Aufwärtsstreckenband 703 MHz - 722,5 MHz beträgt, das erste Abwärtsstreckenband 758 MHz - 777,5 MHz beträgt; das zweite Aufwärtsstreckenband 722,6 MHz - 748 MHz beträgt und das zweite Aufwärtsstreckenband 777,6 MHz - 803 MHz beträgt.

5. Kommunikationsverfahren, das angewandt wird in einer Hochfrequenzvorrichtung, HF-Vorrichtung, umfassend einen ersten Duplexer (10), einen zweiten Duplexer (20) und einen Prozessor (30), wobei der erste Duplexer (10) zum Senden/Empfangen eines ersten Bandsignals in einem ersten Band eingerichtet und mit einem ersten Sendeanschluss und einem ersten Empfangsanschluss des Prozessors (30) verbunden ist, wobei der zweite Duplexer (20) zum Senden/Empfangen eines zweiten Bandsignals in einem zweiten Band eingerichtet und mit einem zweiten Sendeanschluss und einem zweiten Empfangsanschluss des Prozessors (30) verbunden ist, wobei das Kommunikationsverfahren die Schritte umfasst zum:
Bestimmen, durch den Prozessor (30), dass eine Frequenz eines Signals, das zu senden/empfangen ist, zu dem ersten Band oder dem zweiten Band gehört;
wenn sie zu dem ersten Band gehört, Umschalten, durch den Prozessor (30), auf den ersten Duplexer (10), um das Signal zu senden/empfangen; und
wenn sie zu dem zweiten Band gehört, Umschalten, durch den Prozessor (30), auf den zweiten Duplexer (20), um das Signal zu senden/empfangen;
**dadurch gekennzeichnet, dass** das erste Band und das zweite Band derart eingerichtet sind, dass:
das erste Band und das zweite Band zu einem Band 28 gehören, wobei das Band 28 ein Aufwärtsstreckenband mit einem Startfrequenzpunkt von 703 MHz und einem Endfrequenzpunkt von 748 MHz und ein Abwärtsstreckenband mit einem Startfrequenzpunkt von 758 MHz und einem Endfrequenzpunkt von 803 MHz umfasst;
ein Überlappungsband, das aus einer Überlappung zwischen Band 28 und einem DVT-Band besteht, zu dem ersten Band gehört, wobei das Überlappungsband einen Bereich von 703 MHz bis 710 MHz überspannt;
Frequenzprüfpunkte, welche die Werte von 725,5 MHz und 723 MHz aufweisen, zu dem zweiten Band gehören;
das erste Band ein erstes Aufwärtsstreckenband und ein erstes Abwärtsstreckenband umfasst, wobei ein Startfrequenzpunkt des ersten Aufwärtsstreckenbandes gleich dem Startfrequenzpunkt des Aufwärtsstreckenbandes des Bandes 28 ist und ein Endfrequenzpunkt des ersten Aufwärtsstreckenbandes kleiner ist als die Frequenzprüfpunkte; und
das zweite Band ein zweites Aufwärtsstreckenband und ein zweites Abwärtsstreckenband umfasst, wobei ein Startfrequenzpunkt des zweiten Aufwärtsstreckenbandes größer ist als der Endfrequenzpunkt des ersten Aufwärtsstreckenbandes einer Frequenzpunkteinheit von 0,1 MHz und ein Endfrequenzpunkt des zweiten Aufwärtsstreckenbandes gleich dem Endfrequenzpunkt des Aufwärtsstreckenbandes des Bandes 28 ist.

6. Kommunikationsverfahren nach Anspruch 5, wobei
ein Startfrequenzpunkt des ersten Abwärtsstreckenbandes um einen Standardwert von dem Startfrequenzpunkt des ersten Aufwärtsstreckenbandes abweicht; und
ein Startfrequenzpunkt eines zweiten Abwärtsstreckenbandes um den Standardwert von dem Startfrequenzpunkt des zweiten Aufwärtsstreckenbandes abweicht.

7. Kommunikationsverfahren nach Anspruch 6, wobei
ein Differenzwert zwischen dem Endfrequenzpunkt des ersten Aufwärtsstreckenbandes und dem Startfrequenzpunkt des ersten Aufwärtsstreckenbandes gleich einem Differenzwert zwischen einem Endfrequenzpunkt des ersten Abwärtsstreckenbandes und dem Startfrequenzpunkt des ersten Abwärtsstreckenbandes ist; und
ein Differenzwert zwischen dem Endfrequenzpunkt des zweiten Aufwärtsstreckenbandes und dem Startfrequenzpunkt des zweiten Aufwärtsstreckenbandes gleich einem Differenzwert zwischen einem Endfrequenzpunkt des zweiten Abwärtsstreckenbandes und dem Startfrequenzpunkt des zweiten Abwärtsstreckenbandes ist.

8. Kommunikationsverfahren nach Anspruch 7, wobei
das erste Aufwärtsstreckenband 703 MHz - 722,5 MHz beträgt; das erste Abwärtsstreckenband 758 MHz - 777,5 MHz beträgt; das zweite Aufwärtsstreckenband 722,6 MHz - 748 MHz beträgt; und das zweite Aufwärtsstreckenband 777,6 MHz - 803 MHz beträgt.

## Revendications

1. Dispositif radiofréquence (RF), comprenant un premier duplexeur (10), un second duplexeur (20) et un processeur (30), le processeur (30) étant configuré pour inclure un commutateur de canal, le premier duplexeur (10) étant configuré pour émettre/recevoir un premier signal de bande dans une première bande et être connecté à un premier port d'émission (TX1) et à un premier port de réception (RX1) du processeur, le second duplexeur (20) étant configuré pour émettre/recevoir un second signal de bande dans une seconde bande et étant connecté à un second port d'émission (TX2) et à un second port de réception (RX2) du processeur (30), le processeur (30) étant configuré pour sélectionner l'un des duplexeurs correspondants (10, 20) pour émettre/recevoir un signal par le commutateur de canal en fonction d'une bande de fréquence du signal;
**caractérisé en ce que** la première bande et la seconde bande sont configurées de telle sorte que :
la première bande et la seconde bande appartiennent à une Bande 28, la Bande 28 comprenant une bande de liaison montante ayant un point de fréquence de début de 703 MHz et un point de fréquence de fin de 748 MHz et une bande de liaison descendante ayant un point de fréquence de début de 758 MHz et un point de fréquence de fin de 803 MHz;
une bande de chevauchement, constituée d'un chevauchement entre la Bande 28 et une bande DVT, appartient à la première bande, la bande de chevauchement s'étendant de 703 MHz à 710 MHz ;
des points de test de fréquence ayant les valeurs de 725,5 MHz et 723 MHz appartiennent à la seconde bande;
la première bande comprend une première bande de liaison montante et une première bande de liaison descendante, dans lequel un point de fréquence de début de la première bande de liaison montante est égal au point de fréquence de début de la bande de liaison montante de la Bande 28 et un point de fréquence de fin de la première bande de liaison montante est inférieur aux points de test de fréquence; et
la seconde bande comprend une seconde bande de liaison montante et une seconde bande de liaison descendante, dans lequel un point de fréquence de début de la seconde bande de liaison montante est supérieur au point de fréquence de fin de la première bande de liaison montante d'une unité de point de fréquence de 0,1 MHz, et un point de fréquence de fin de la seconde bande de liaison montante est égal au point de fréquence de fin de la bande de liaison montante de la Bande 28.

2. Dispositif RF selon la revendication 1, dans lequel
un point de fréquence de début de la première bande de liaison descendante diffère d'une valeur par défaut du point de fréquence de début de la première bande de liaison montante; et
un point de fréquence de début d'une seconde bande de liaison descendante diffère de la valeur par défaut du point de fréquence de début de la seconde bande de liaison montante.

3. Dispositif RF selon la revendication 1, dans lequel
une valeur de différence entre le point de fréquence de fin de la première bande de liaison montante et le point de fréquence de début de la première bande de liaison montante est égale à une valeur de différence entre un point de fréquence de fin de la première bande de liaison descendante et le point de fréquence de début de la première bande de liaison descendante; et
une valeur de différence entre le point de fréquence de fin de la seconde bande de liaison montante et le point de fréquence de début de la seconde bande de liaison montante est égale à une valeur de différence entre un point de fréquence de fin de la seconde bande de liaison descendante et le point de fréquence de début de la seconde bande de liaison descendante.

4. Dispositif RF selon la revendication 3, dans lequel
la première bande de liaison montante est de 703 MHz à 722,5 MHz, la première bande de liaison descendante est de 758 MHz à 777,5 MHz;
la seconde bande de liaison montante est de 722,6 MHz à 748 MHz, et la seconde bande de liaison descendante est de 777,6 MHz à 803 MHz.

5. Procédé de communication, appliqué dans un dispositif radiofréquence, RF, comprenant un premier duplexeur (10), un second duplexeur (20), et un processeur (30), le premier duplexeur (10) étant configuré pour émettre/recevoir un premier signal de bande dans une première bande et étant connecté à un premier port d'émission et à un premier port de réception du processeur (30), le second duplexeur (20) étant configuré pour émettre/recevoir un second signal de bande dans une seconde bande et étant connecté à un second port d'émission et à un second port de réception du processeur (30), le procédé de communication comprenant les étapes consistant à :
déterminer, par le processeur (30), qu'une fréquence d'un signal à émettre/recevoir appartient à la première bande ou à la seconde bande;
si elle appartient à la première bande, le processeur (30) commute sur le premier duplexeur (10) pour émettre/recevoir le signal; et
si elle appartient à la seconde bande, le processeur (30) commute sur le second duplexeur (20) pour émettre/recevoir le signal;
**caractérisé en ce que** la première bande et la seconde bande sont configurées de telle sorte que :
la première bande et la seconde bande appartiennent à une Bande 28, la Bande 28 comprenant une bande de liaison montante ayant un point de fréquence de début de 703 MHz et un point de fréquence de fin de 748 MHz et une bande de liaison descendante ayant un point de fréquence de début de 758 MHz et un point de fréquence de fin de 803 MHz;
une bande de chevauchement, constituée d'un chevauchement entre la Bande 28 et une bande DVT, appartient à la première bande, la bande de chevauchement s'étendant de 703 MHz à 710 MHz ;
des points de test de fréquence ayant les valeurs de 725,5 MHz et 723 MHz appartiennent à la seconde bande;
la première bande comprend une première bande de liaison montante et une première bande de liaison descendante, dans lequel un point de fréquence de début de la première bande de liaison montante est égal au point de fréquence de début de la bande de liaison montante de la Bande 28 et un point de fréquence de fin de la première bande de liaison montante est inférieur aux points de test de fréquence; et
la seconde bande comprend une seconde bande de liaison montante et une seconde bande de liaison descendante, dans lequel un point de fréquence de début de la seconde bande de liaison montante est supérieur au point de fréquence de fin de la première bande de liaison montante d'une unité de point de fréquence de 0,1 MHz, et un point de fréquence de fin de la seconde bande de liaison montante est égal au point de fréquence de fin de la bande de liaison montante de la Bande 28.

6. Procédé de communication selon la revendication 5, dans lequel un point de fréquence de début de la première bande de liaison descendante diffère d'une valeur par défaut du point de fréquence de début de la première bande de liaison montante; et
un point de fréquence de début d'une seconde bande de liaison descendante diffère de la valeur par défaut du point de fréquence de début de la seconde bande de liaison montante.

7. Procédé de communication selon la revendication 6, dans lequel une valeur de différence entre le point de fréquence de fin de la première bande de liaison montante et le point de fréquence de début de la première bande de liaison montante est égale à une valeur de différence entre un point de fréquence de fin de la première bande de liaison descendante et le point de fréquence de début de la première bande de liaison descendante; et
une valeur de différence entre le point de fréquence de fin de la seconde bande de liaison montante et le point de fréquence de début de la seconde bande de liaison montante est égale à une valeur de différence entre un point de fréquence de fin de la seconde bande de liaison descendante et le point de fréquence de début de la seconde bande de liaison descendante.

8. Procédé de communication selon la revendication 7, dans lequel la première bande de liaison montante est de 703 MHz à 722,5 MHz, la première bande de liaison descendante est de 758 MHz à 777,5 MHz;
la seconde bande de liaison montante est de 722,6 MHz à 748 MHz, et la seconde bande de liaison descendante est de 777,6 MHz à 803 MHz.
